# EUROPÄISCHE PATENTSCHRIFT

(11) **EP 1 157 224 B1**
(45) Veröffentlichungstag und Bekanntmachung des Hinweises auf die Patenterteilung: **16.10.2002**
(21) Anmeldenummer: 00916752.9
(22) Anmeldetag: 14.02.2000
(51) Int. Cl.: F16H 29/20, F16H 29/08

(54) **STUFENLOS EINSTELLBARES GETRIEBE**
CONTINUOUSLY ADJUSTABLE TRANSMISSION
TRANSMISSION A VARIATION CONTINUE

(30) Priorität: 19.02.1999 DE 19907775
(43) Veröffentlichungstag der Anmeldung: 28.11.2001
(73) Patentinhaber: Berger, Matthias, 99423 Weimar (DE)
(72) Erfinder: Berger, Matthias, 99423 Weimar (DE)
(74) Vertreter: Wagner, Gerd, Dipl.-Phys.
(86) Internationale Anmeldenummer: DE0000439
(87) Internationale Veröffentlichungsnummer: WO00049311

(56) Entgegenhaltungen:
- CH-A- 449 341
- DE-C- 378 415
- US-A- 1 769 847
- US-A- 1 869 189
- US-A- 1 957 359
- US-A- 2 244 657
- US-A- 3 779 094

## Beschreibung

Die Erfindung betrifft ein Getriebe mit stufenlos einstellbarer Übersetzung zur Wandlung von Drehzahlen und Drehmomenten zwischen zwei Wellen nach dem Oberbegriff des Patentanspruchs 1. Stufenlos einstellbare Getriebe (Drehzahlwandler) finden in der gesamten Antriebstechnik, insbesondere bei Werkzeugmaschinen und bei Fahrzeugantrieben Verwendung.

### Stand der Technik

Antriebsmaschinen sind in ihrer mechanischen Leistung drehzahlabhängig. Sie arbeiten üblicherweise in ihrem wirtschaftlichsten Drehzahlbereich mit günstigem Energieverbrauch oder im Bereich maximal abgegebener Leistung. Dagegen sollen die angetriebenen Maschinen entsprechend ihrer Verwendung bzw. ihrem jeweiligen Betriebszustand unterschiedliche Drehzahlen aufweisen. Durch Wechselgetriebe mit entsprechenden Übersetzungsverhältnissen werden deshalb die Drehzahlen von Antriebseinheit und angetriebener Maschine einander angepaßt. So kann bei optimaler Einstellung des Übersetzungsverhältnisses der Verlust an Motorleistung gering gehalten werden. Durch Getriebe mit stufenlos einstellbarer Übersetzung ist bei entsprechendem Wirkungsgrad der Anordnung eine optimale Übertragung der Drehbewegung bei geringem Leistungsverlust möglich.

Bei derartigen stufenlosen Drehzahlwandlern unterscheidet man entsprechend ihren Arbeitsprinzipien mechanische, elektrische und hydraulische Wandler. Als mechanische Systeme zur Drehzahlwandlung sind neben den Reibräder- und Zugmittelgetrieben auch die Freilaufgetriebe, oft als Schaltwerksgetriebe bezeichnet, gebräuchlich. Bei ihnen wird die gleichförmige Drehbewegung einer Antriebswelle in periodische Schwingungen oder ungleichmäßige Drehbewegungen umgeformt. Diese werden im Bereich der Geschwindigkeitsspitze mittels Freilauf in eine gleichgerichtete Drehbewegung der Abtriebswelle umgewandelt. Um die Ungleichmäßigkeit der Drehbewegung zu verringern und annähernd konstante Übersetzungsverhältnisse zu erzielen, verwendet man auf der Antriebswelle Koppel- oder auch Kurvengetriebe in Mehrfachausführung, die zueinander phasenverschoben arbeiten. Durch die Überlagerung der einzelnen Bewegungskurven erhält man eine mehr oder weniger dicht um einen Mittelwert schwankende Größe für die Winkelgeschwindigkeit der Abtriebswelle, wobei diese Schwankungen um so geringer ausfallen, je größer die Zahl der nebeneinander angeordneten und mit Phasenverschiebung arbeitenden Einzelgetriebe ist. Die noch vorhandene Ungleichförmigkeit der Drehbewegung kann aber erhebliche Belastungsstöße hervorrufen und verursacht dadurch einen hohen Verschleiß und eine geringe Lebensdauer des Getriebes. Die bekannt gewordenen Schaltwerksgetriebe sind daher auch nur für geringe mechanische Leistungen ausgelegt.

Es sind aber auch schon Getriebe mit absatzweise treibenden Gliedern vorgeschlagen worden, die eine prinzipielle Gleichförmigkeit der Übersetzung anstreben. Im Ergebnis sind diese Lösungen aber entweder nicht zufriedenstellend, nicht genügend verschleißfest oder sie erfordern einen hohen baulichen Aufwand.

Nach den Merkmalen des Oberbegriffs des Patentanspruchs 1 arbeitet eine Variante eines in DE-PS 474 205 beschriebenen Schaltwerksgetriebes. Hierbei wird die Drehbewegung der Antriebswelle mittels mehrerer auf der treibenden Welle angeordneter Kurvenscheiben in eine Hin- und Herbewegung von Schubstangen und unter Zwischenschaltung einer veränderlichen Übersetzungseinrichtung in eine Hin- und Herbewegung von Zahnstangen umgewandelt, die anschließend über Zahnräder und Sperrkupplungen (Freilaufkupplungen) nacheinander auf die Abtriebswelle einwirken und diese antreiben. Die Übersetzungseinrichtung besteht aus einem zweiarmigen Hebel mit verstellbarem Drehpunkt zur Veränderung der jeweils wirksamen Hebellängen und damit auch der Übersetzungsgröße. Während der Kraftübertragungsphase bewegen sich die Zahnstangen mit gleichbleibender Geschwindigkeit und können somit die Abtriebswelle mit gleichbleibender Winkelgeschwindigkeit antreiben.
Auch in dem Getriebesystem nach US-PS 45 65 105 erfolgt die Bewegungsübertragung von der An- auf die Abtriebswelle über mit der antreibenden Welle umlaufende Kurvenscheiben und Abtastglieder, welche die Drehbewegung in je eine Translationsbewegung umformen, die ebenfalls über je einen drehbar gelagerten Hebel mit verstellbarer Drehachse aufje ein Zahnstangen/Zahnrad-Teilgetriebe übertragen und unter Zwischenschaltung je eines Freilaufs in eine Drehbewegung der getricbenen Welle umgewandelt wird.

Weiterhin wird in einer Anordnung nach DE-PS 718 316 die gleichförmige Drehbewegung der Antriebswelle ebenfalls durch ein ebenes Kurvengetriebe in die Hin- und Herbewegung eines Schubglieds umgeformt, wobei die translatorische Bewegung zeitweise gleichförmig ist. Bei diesem ebenen Kurventrieb führt allerdings das Eingriffsglied (Kurbel) die Drehbewegung der Antriebswelle aus, während das Kurvenglied - als Schieber ausgebildet - die Hin- und Herbewegung vollführt. Die Bewegung des Schiebers soll wiederum über einen zweiarmigen Hebel in eine geradlinige Bewegung einer Zahnstange übertragen werden, die auf ein Schaltwerk der Abtriebswelle einwirkt.

Ein wesentlicher Mangel dieser Getriebesysteme besteht darin, daß die bei der Umsetzung der Translationsbewegung der Zahnstange in die Drehbewegung des Zahnrads auftretenden Verschleißerscheinungen, die vor allem durch Gleitreibungseffekte hervorgerufen werden, gerade im Dauerbetrieb von beträchtlicher Größe sind und somit die Zuverlässigkeit des Gesamtgetriebes erheblich beeinträchtigen können. Diese Verschleißerscheinungen betreffen besonders diejenigen Bereiche der Verzahnung von Zahnstange und Zahnrad, die bei der periodischen Belastung im Dauerbetrieb häufiger einer besonders großen mechanischen Belastung ausgesetzt sind als andere Bereiche. Die ungleichmäßige Verteilung des Materialabtrages durch Verschleiß infolge der ungleichmäßigen Beanspruchung der zur Verfügung stehenden Hubstrecke der Zahnstange wird noch dadurch verstärkt, daß bei einem - infolge Vergrößerung der Übersetzungseinstellung - verringerten Hub (Verringerung der Länge der Hubstrecke) die zu übertragende Kraft - unter der Voraussetzung einer konstanten Übertragungsleistung - noch zunimmt.

Die starke und vor allem auch ungleichmäßige Abnutzung an den funktionsbestimmenden Kontaktflächen der Verzahnung hat aber Abweichungen von der gewünschten Relativbewegung der Getriebemittel zur Folge, die wiederum die Ursache für einen rasch fortschreitenden Verschleißprozeß sind. Zusätzlich entsteht eine Ungleichmäßigkeit im Getriebelauf mit der Frequenz des Zahneingriffs, weil sich die Flankenbereiche jedes Zahnes ungleichmäßig abnutzen, wobei die Verschleißvorgänge am Zahnfuß am ausgeprägtesten sind.

Die angeführten Nachteile verringern die Zuverlässigkeit und Betriebsdauer derartiger Getriebesysteme beträchtlich.

### Darstellung der Erfindung

Es ist daher die Aufgabe der Erfindung, ein mechanisches Getriebe mit kontinuierlich veränderbarem Übersetzungsverhältnis, mit möglichst gleichförmiger Übertragung der Drehbewegung der Antriebs- auf die Abtriebswelle und geringen Verschleißerscheinungen an den funktionsbestimmenden Kontaktflächen zu schaffen. Dadurch soll sich die Zuverlässigkeit des Gesamtsystems verbessern sowie dessen maximale Betriebsdauer erhöhen. Weiterhin soll das mit absatzweise treibenden Gliedern arbeitende mechanische Getriebe zur stufenlosen Drehzahl- bzw. Drehmomentwandlung für einen Einsatz innerhalb eines großen Bereiches zu übertragender mechanischer Leistung geeignet sein. Es soll außerdem schlupffrei sein und mit einem hohen Wirkungsgrad arbeiten.

Den Abweichungen von der gewünschten Relativbewegung der Getriebemittel infolge einer ungleichmäßigen Abnutzung an den funktionsbestimmenden Kontaktflächen des zweiten Kraftübertragungsmittels wird erfindungsgemäß durch die Verwendung eines räumlichen Kurventriebs oder eines Schraubentriebs unter Ausnutzung von zwei positiven Wirkeffekten begegnet.
Man erreicht durch den Einsatz von räumlichen Kurvengetrieben oder Schraubengetrieben mit Wälzschraubgelenk einerseits, daß an die Stelle von Gleitreibung eine wesentlich verschleißärmere Rollreibung tritt und somit der Verschleiß durch Reibung an den funktionsbestimmenden Kontaktflächen ganz allgemein geringer wird.
Andererseits verringert die Ausdehnung der Kontaktflächen längs der Bewegungsrichtung beim Schraubengetriebe - und zusätzlich die geringere Flächenpressung beim Schraubengetriebe mit Gleitschraubgelenk - die Ungleichmäßigkeit der Abnutzung an den funktionsbestimmenden Kontaktflächen des zweiten Kraftübertragungsmittels. Denn die bei der Kraftübertragung wirksamen Kontaktzonen sind bei einem Zahnrad-Zahnstangentrieb theoretisch linienförmig und besitzen daher eine große Flächenpressung. Demgegenüber sind bei der erfindungsgemäßen Anordnung mit einem Schraubengetriebe - zumindest beim Einsatz eines Gleitschraubgelenks - die Kontaktzonen flächenhaft. Die Flächenpressung verringert sich dadurch ganz wesentlich. Weiterhin werden beim Zahnrad - Zahnstangentriebe die linienförmigen Kontaktzonen in Bewegungsrichtung quer zu deren Ausdehnung verschoben, hingegen wird beim Schraubentrieb mit Gleitschraubgelenk ein flächenhafter Kontaktbereich längs einer seiner Ausdehnungsrichtungen bewegt. Das bedeutet, daß jeder Punkt der kontaktierbaren Oberfläche des Hubelementes beim Zahnrad - Zahnstangentrieb jeweils nur in einer ganz bestimmten Position des Hubelementes berührt wird, während beim Schraubentrieb mit Gleitschraubgelenk die Berührung eines solchen Punktes in einem ganzen Streckenabschnitt der zur Verfügung stehenden Hubstrecke des Hubelementes erfolgt.
Verwendet man ein Schraubengetriebe mit Wälzschraubgelenk oder ein räumliches Kurvengetriebe mit mehreren Kurvenrollen, so tritt an die Stelle eines flächenhaften Kontaktbereichs ein mehrfacher, theoretisch zwar nur punkt- oder linienförmiger Kontakt. Die Kontaktzonen sind hierbei allerdings längs der Bewegungsrichtung angeordnet, weshalb ein Punkt der kontaktierbaren Oberfläche wenigstens in mehreren Positionen innerhalb der zur Verfügung stehenden Hubstrecke des Hubelements berührt wird.
Daraus resultiert bei der Verwendung eines Schraubengetriebes oder eines räumlichen Kurvengetriebes mit mehreren Kurvenrollen eine wesentlich gleichmäßigere Verteilung der Verschleißwirkung am zweiten Kraftübertragungsmittel bei der (für gewöhnlich) sehr ungleichmäßigen Benutzung der Hubstrecke durch das Schubglied (Hubelement) als bei einem Zahnrad- Zahnstangengetriebe.

### Zeichnungen und Beschreibung der Ausführungsbeispiele

Die Erfindung soll anhand mehrerer Ausführungsbeispiele und dazugehörigen Abbildungen näher erläutert werden. Es wird dabei vorausgesetzt, daß die Übersetzungs einstellung über die hier betrachteten Zeitabschnitte gerade konstant gehalten wird.
Es zeigen
die Fig. 1a in einer teilweise schematischen Darstellung die wesentlichen Elemente des erfindungsgemäßen Getriebes, die Fig. 1b das Getriebe nach Fig. 1a in einer Schnittdarstellung,
die Fig. 2 im teilweisen Schnitt eine erfindungsgemäße Ausführungsform eines ersten Kraftübertragungsmittels einer Getriebeeinheit,
die Fig. 3 im teilweisen Schnitt eine erfindungsgemäße Ausführungsform eines zweiten Kraftübertragungsmittels einer Getriebeeinheit,
die Fig. 4a, b Elemente eines Schraubgelenks für ein Schraubengetriebe, das als erstes Kraftübertragungsmittel dienen soll,
die Fig. 5 schematisch eine Ausgestaltung der Erfindung unter Verwendung eines ebenen Kurvengetriebes als erstes und eines Schraubengetriebes als zweites Kraftübertragungsmittel und
die Fig. 6 ein erfindungsgemäßes erstes Kraftübertragungsmittel, gebildet durch ein Schraubengetriebe mit einer Kupplungsvorrichtung.

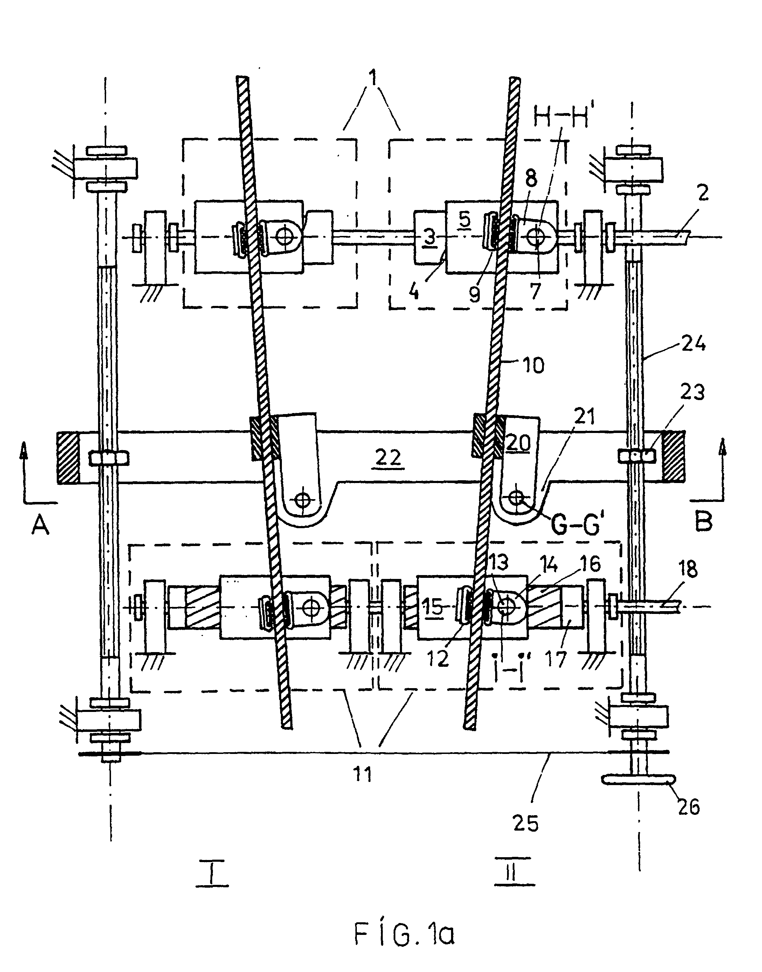

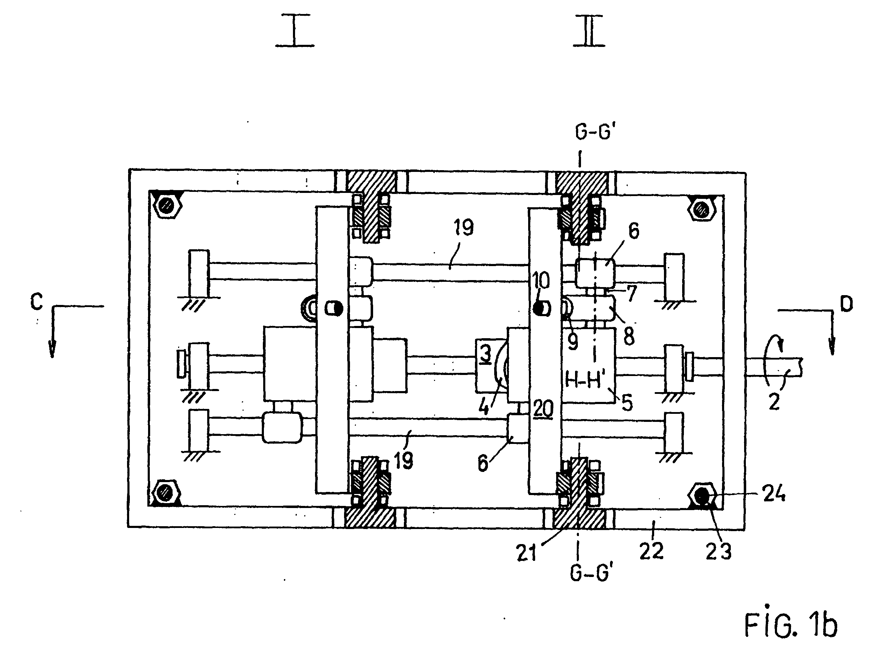

Die Fig. 1a - sie entspricht zugleich einem Schnitt entlang C-D in Fig. 1b - zeigt schematisch ein Getriebe gemäß der Erfindung, dessen zwei gleichartig aufgebaute Getriebeeinheiten I und II nebeneinander angeordnet sind. Die Fig. 1b entspricht einem Schnitt entlang A-B in der Fig. 1a. In jeder Getriebeeinheit wird für das erste Kraftübertragungsmittel 1 ein räumliches Kurvengetriebe mit einem Kurvenzylinder 3 , versehen mit Nutkurven 4, verwendet. Der Kurvenzylinder ist verdrehfest auf einer Antriebswelle 2 befestigt. Als Eingriffsglied 5 dient ein den Kurvenzylinder 3 konzentrisch umschließendes Hülsenelement, das innenwandig zwei Kurvenrollen aufweist. Das Eingriffsglied wird mit Hilfe von Linearkugellagern 6 längs kreisrunder Führungsschienen 19 geführt. Über ein Drehgelenk 7, einen Gelenkträger 8 und eine Führung 9, ausgebildet als Linearkugellager, erfolgt eine Kraftübertragung vom Eingriffsglied 5 auf einen zweiarmigen Hebel, gebildet durch eine runde Hebelschiene 10, die an einem Hebelschienenträger 20 befestigt ist. Der Hebelschienenträger ist um eine Achse G-G' drehbar in einem Lagerhalter 21 eines Rahmens 22 gelagert. Die Achse G--G' ist damit die Drehachse des zweiarmigen Hebels. Auf der anderen Seite der Hebelschiene 10 wird die Hebelbewegung über eine auf der Hebelschiene bewegliche Führung 12, die ebenfalls als Linearkugellager ausgebildet ist, auf einen Gelenkträger 14 übertragen. Der Gelenkträger ist über ein Drehgelenk 13 an einem Schubglied 15 eines zweiten Kraftübertragungsmittels 11 drehbar befestigt. Das Schubglied besitzt Innengewinde und bildet als Mutter das Gegenstück zu einer Gewindespindel 16, die drehbar auf einer Abtriebswelle 18 gelagert ist. Die Bewegung des Schubgliedes 15 wird auf diese Weise in eine Drehschwingung der Gewindespindel 16 umgeformt. Die Führung des Schubgliedes (hier nicht dargestellt). erfolgt - wie beim Eingriffsglied 5 - mit Hilfe von Linearkugellagern längs runder Führungsschienen, die zur Antriebswelle 2, der Abtriebswelle 18 und den Führungsschienen 19 parallel verlaufen. Von der Drehschwingung der Gewindespindel 16 wird jeweils in der Kraftübertragungsphase der Abschnitt gleichförmiger Drehbewegung über eine selbstschaltende oder schaltbare Kupplung 17 auf die Abtriebswelle 18 übertragen.

Das Drehgelenk 7 besitzt eine Drehachse H--H', während sich das Drehgelenk 13 um eine Achse I--I' dreht. Die Achsen G--G', H--H' und I--I' müssen sich im gleichen Abstand von der Hebelschiene 10 befinden und parallel zueinander verlaufen. Damit wird garantiert, daß sie stets in einer gemeinsamen und zur Hebelschiene parallelen Ebene liegen.
Der Rahmen 22 kann mit Hilfe von Gewindespindeln 24 und Muttern 23 relativ zum Gehäuse verschoben und in einer vorgewählten Position fixiert werden. Die Verdrehung der Gewindespindeln erfolgt immer gleichsinnig und um jeweils gleiche Beträge, z. B. unter Verwendung eines durch ein Handrad 26 betätigten Kettentriebs 25.

Die Bewegung der Schubglieder 15 ist von der jeweiligen Übersetzungseinstellung der Hebel abhängig, wobei sich das Übersetzungsverhältnis aus dem Verhältnis der wirksamen Hebellängen HG: GI des Hebels bestimmt. Die wirksamen Hebellängen werden durch die Positionierung des Rahmens 22 mit Hilfe der Gewindespindeln 24 festgelegt, da der Rahmen die Lagerhalter 21 für die drehbare Lagerung der Hebel trägt. Durch die Verdrehung der Gewindespindeln kann somit das Übersetzungsverhältnis stufenlos verstellt werden und innerhalb gewisser Grenzen jeden beliebigen, vorgegebenen Wert annehmen. Die versetzte Aufhängung der Hebelschienen 10 am Hebelschienenträger 20 ermöglicht es in der hier beschriebenen Ausführungsform, den Rahmen 22 soweit zu verschieben, bis sich die Achsen G--G' und I―I' überdecken. Dadurch kann die Abtriebsdrehzahl (bei umlaufender Antriebswelle) bis auf den Wert Null abgesenkt werden.

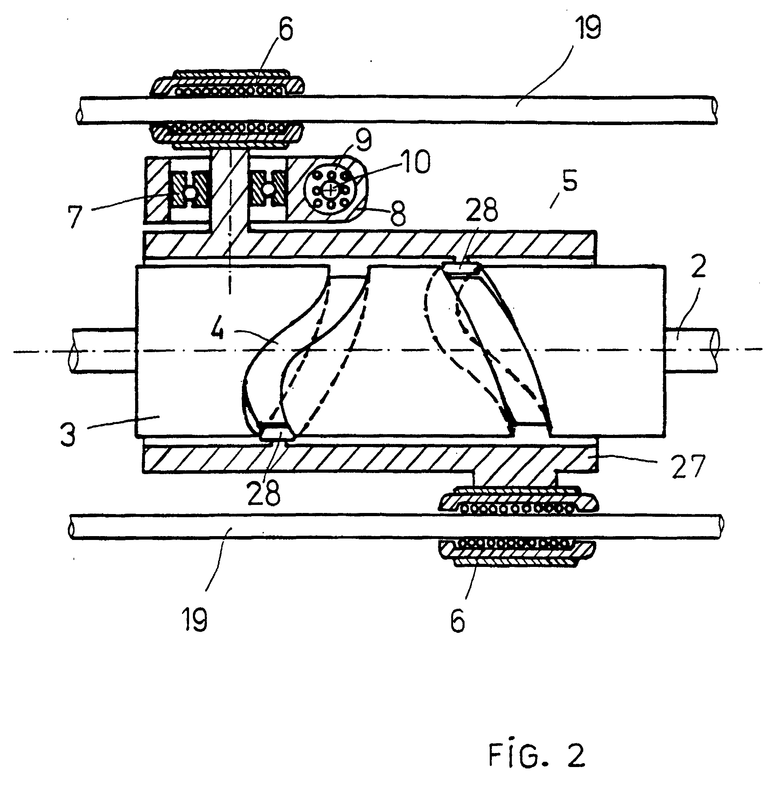

Fig. 2 zeigt im Aufriß, teilweise geschnitten, eine mögliche Ausführungsform eines räumlichen Kurvengetriebes als erstes Kraftübertragungsmittel, wobei die Linearkugellager 6 und der Gelenkträger 8 und eine Hülse 27 des Eingriffsgliedes 5 in einer die Mittelachsen von Antriebswelle 2 und Führungsschienen 19 enthaltenden Schnittebene geschnitten dargestellt sind. Das räumliche Kurvenglied ist als Kurvenzylinder 3 ausgebildet, der zwei längs der Antriebswelle versetzt und um diese um 180° zueinander gedreht angeordnete Nutkurven 4 aufweist. Das Eingriffsglied 5 des Kurvengetriebes mit seiner den Kurvenzylinder konzentrisch umfassenden Hülse 27 und zwei versetzt zueinander und um 180° gedreht angeordneten Kurvenrollen 28 wird durch Linearkugellager 6 geführt, die sich entlang der gestellfesten Führungsschienen 19 bewegen können. Durch die besondere Ausgestaltung des Eingriffsgliedes 5 als ein den Kurvenzylinder umfassendes Bauteil kann es mit mehreren Kurvenrollen ausgestattet werden. Deren axiale Versetzung und Verdrehung um die Wellenachse erfordert auch eine entsprechende Versetzung und Verdrehung der zugehörigen Nutkurven 4 auf dem Kurvenzylinder 3. Um zu erreichen, daß sich unerwünschte Kraftkomponenten weitgehend gegenseitig aufheben, ist eine gewissermaßen symmetrische Anordnung der Kurvenrollen von Vorteil. Verwendet man also n Kurvenrollen, wobei n = 1,2,3... ist, so sind diese am günstigsten um die Wellenachse um 360°/ n gedreht zueinander anzuordnen.

Die vom Kurvenzylinder auf das Eingriffsglied übertragene Kraft versetzt dieses in eine Hin- und Herbewegung, die wiederum über einen Gelenkträger 8 und ein Linearkugellager 9 in eine schwingende Drehbewegung der Hebelschiene 10 des zweiarmigen Hebels umgeformt wird. Die Kraftübertragung vom Eingriffsglied 5 auf den Gelenkträger 8 erfolgt über das als Radialkugellager ausgebildete Drehgelenk 7. Das Drehgelenk 7 ermöglicht es dem Gelenkträger 8, sich ständig an die veränderliche Ausrichtung der Hebelschiene anzupassen.

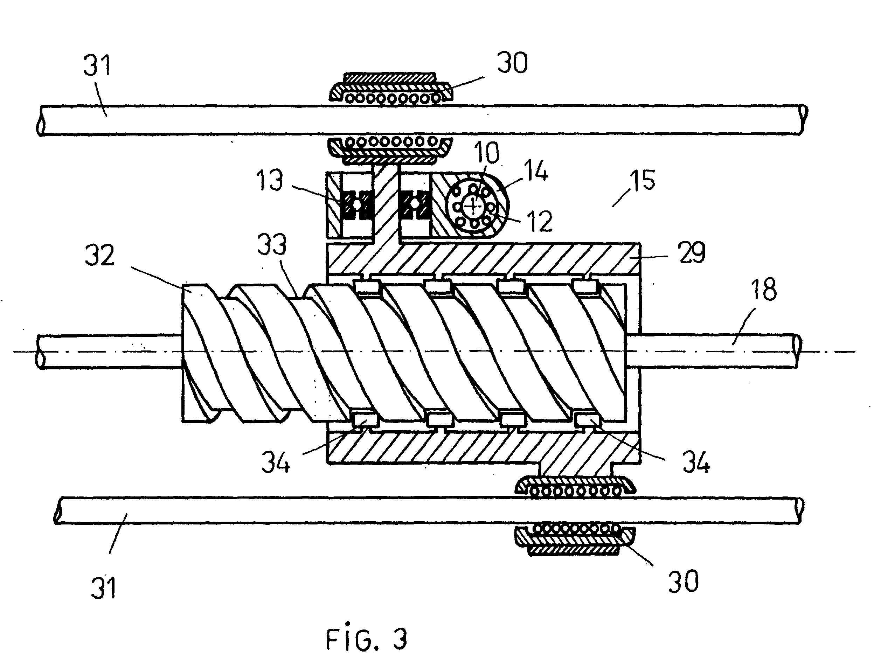

Fig. 3 zeigt im teilweisen Schnitt ein räumliches Kurvengetriebe, das als zweites Kraftübertragungsmittel Verwendung findet. Hierbei sind - wie auch in Fig. 2 - eine Hülse 29 des Schubgliedes 15, das als Eingriffsglied des Kurventriebs dient, die Linearkugellager 30 und der Gelenkträger 14 geschnitten dargestellt, wobei die Schnittebene durch die Mittelachsen von Abtriebswelle 18 und Führungsschienen 31 verlauft. In diesem Ausführungsbeispiel weist das räumliche Kurvengetriebe ein zylinderförmiges Kurvenglied 32 auf, das wie ein (zweigängiges) Gewinde zwei offene Nutkurven 33 mit konstanter Steigung besitzt, die mehrere Umdrehungen beschreiben. Wegen der konstanten Steigung der Nutkurven ist es hierbei möglich, daß sich jede Nutkurve gleichzeitig mit mehreren Kurvenrollen 34 im kraftübertragenden Eingriff befindet. Dadurch wird die zu übertragende Kraft auf mehrere Kurvenrollen verteilt. Wie auch beim Schraubengetriebe mit Wälzschraubgelenk, ist also ein Mehrfachkontakt zwischen dem Kurvenglied 32 und dem Schubglied 15 vorhanden, wobei auch hier die Kontaktzonen auf dem Kurvenglied längs der Bewegungsrichtung versetzt sind. Dadurch wird eine gleichmäßigere Verteilung der Verschleißerscheinungen auf dem Kurvenkörper längs der relativen Bewegungsrichtung der Kurvenrollen möglich.
Die Funktionsweise des Gelenkträgers 14 und des Drehgelenks 13 entspricht der der Anordnung nach Fig. 1a.
Die schaltbare oder selbstschaltende Kupplung ist in dieser Figur nicht dargestellt

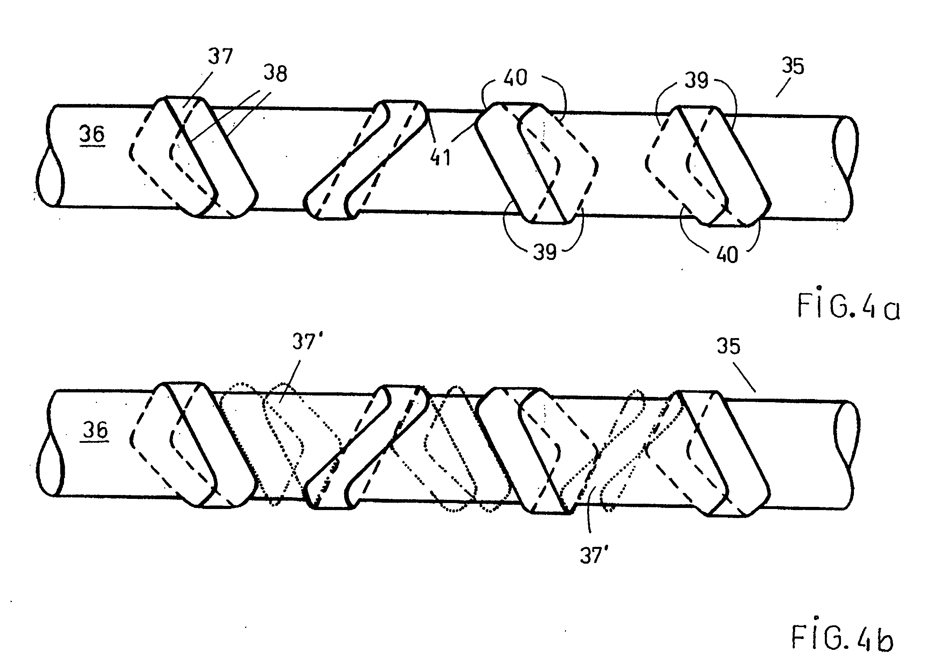

In Fig. 4 a ist eines der beiden relativ zum Gestell beweglichen Glieder eines Schraubengetriebes, das als erstes Kraftübertragungsmittel dienen soll, im Bereich des Schraubgelenks dargestellt. Ein Glied 35 besitzt einen Bolzen als (Schraub)-Gelenkelement 36, welches damit eine einem Außengewinde vergleichbare raumgeometrische Form aufweist In der Darstellung sind hier nur die Profilerhebungen 37 mit je zwei Flanken, angedeutet durch ihre Kanten 38, gezeigt. Auf die Form des Profils soll hier nicht weiter eingegangen werden. Im Unterschied zu den sonst üblichen Gewindearten machen jedoch die Gewindeerhebungen hierbei nur einen kleinen Anteil an der gesamten Mantelfläche des Gelenkelements aus. Da das Schraubengetriebe mit dem (Schraub)-Gelenkelement gemäß der Erfindung als erstes Kraftübertragungsmittel benutzt werden soll, muß bei einer relativen Drehung zwischen den beiden durch das Gelenk verbundenen Gliedern in nur einer Drehrichtung die translatorische Komponente der Relativbewegung in beiden Richtungen vorhanden sein. Somit müssen die Gewindeerhebungen Rechts- und Linksgewindeabschnitte 39 und 40 ausweisen, die sich mittels abgerundeter Zwischenabschnitte 41 zu geschlossenen Kurven ergänzen. Die Rechtsgewindeabschnitte befinden sich während der Lastbewegung im Eingriff mit dem anderen beweglichen Glied und erzeugen dabei eine langsame Schubbewegung. Dagegen bewirken die Linksgewindeabschnitte eine schnelle Schubbewegung in umgekehrter Richtung, die als Rückholbewegung dient.

In Fig. 4 b sind zusätzlich zu den in Fig. 4 a gezeigten Einzelheiten zur Gewindeform des Gliedes 35 die Profilerhebungen 37' des (Schraub)- Gelenkelementes des anderen beweglichen Gliedes (hier nicht dargestellt) - in einer möglichen Eingriffsstellung mit dem Gelenkelement 36 - angedeutet.

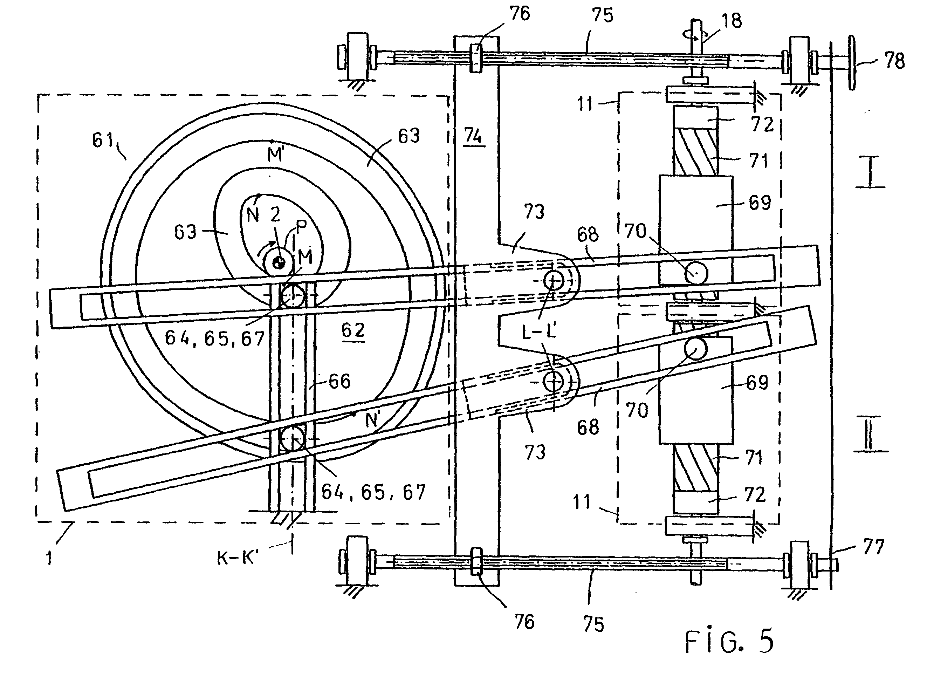

Die Fig. 5 stellt schematisch ein Getriebe gemäß der Erfindung dar, bei dem ein auf der Antriebswelle 2 befestigtes ebenes Kurvenglied zwei Getriebeeinheiten I und II antreibt, deren zweite Kraftübertragungsmittel 11 auf der Abtriebswelle 18 axial nebeneinander angeordnet sind.
Als ein erstes Kraftübertragungsmittel 1 wird ein ebenes Kurvengetriebe mit einem Kurvenglied 61 verwendet, das aus zwei deckungsgleichen und synchron sich drehenden, einseitig mit je zwei Nutkurven 63 versehenen Kurvenscheiben 62 besteht, die verdrehfest mit der Antriebswelle 2 verbunden sind. Zwecks einer besseren Übersichtlichkeit ist die vordere Kurvenscheibe nicht dargestellt.
Im Lastbereich - in der Figur zwischen den Positionen M(M') und N(N') bei rechtsdrehender Scheibe - haben die Kurvenflanken der Nutkurven 63 jeweils die Gestalt einer zum gleichen erzeugenden Kreis P gehörigen Kreisevolvente. Als Eingriffsglied dient jeweils eine einfache Achse mit zwei auf ihr drehbar gelagerten Kurvenrollen 64, von denen jede mit einer Kurvenscheibe im Eingriff steht. Das Eingriffsglied wird mittels Führungsrollen 65 entlang von Führungsschienen 66 in einer Führungsbahn K-K' geradlinig geführt. Mit Hilfe von Hebelschienenrollen 67, die auf derselben Achse wie die Kurvenrollen und die Führungsrollen drehbar gelagert sind, wird die Bewegung des Eingriffsgliedes auf ein Hebelsystem mit Hebelschienen 68 übertragen. Jede Hebelschiene ist drehbar gelagert und bewegt eine Mutter 69, die als Schubglied für ein zweites Kraftübertragungsmittel 11 dient, über eine an der Mutter angebrachte Hebelschienenrolle 70.

Das Schubglied wird durch - hier nicht dargestellte - Linearführungen entlang von Führungsschienen geführt, die - wie die Abtriebswelle 18 - parallel zur Führungsbahn K-- K' und zu den Führungsschienen 66 verlaufen. Die Mutter 69 läßt eine Gewindespindel 71 des Kraftübertragungsmittels 11 Drehschwingungen ausführen. Von diesen Drehschwingungen werden jeweils in der Kraftübertragungsphase die Abschnitte gleichförmiger Drehbewegung über eine selbstschaltende oder schaltbare Kupplung 72 auf die Abtriebswelle 18 übertragen.
Die drehbare Lagerung des Hebelsystems erfolgt in Lagerhaltern 73 mittels durch Kröpfung versetzt angeordneter Achsstummel. Die Lagerhalter sind an einem Rahmen 74 befestigt, der unter Verwendung von Gewindespindeln 75 und Muttern 76 relativ zum Gehäuse verschoben und in der vorgewählten Position fixiert werden kann. Die Verdrehung der Gewindespindeln erfolgt immer gleichsinnig und um jeweils gleiche Beträge unter Verwendung eines Übertragungsgetriebes, z. B. eines Kettentriebes 77, betätigt durch ein Handrad 78.
Die Verwendung mehrerer Gewindespindeln und Muttern sowie des Übertragungsgetriebes kann entfallen, wenn eine entsprechende Führung die Versetzung des Rahmens mit ausreichender Genauigkeit der Parallelität gewährleistet.
Die versetzte Anordnung der Drehachsen L--L' am Hebelsystem ermöglicht es, diese bis zu den Führungsschienen der Muttern 69 und auch darüber hinaus zu verschieben. Dadurch kann die Abtriebsdrehzahl bis auf den Wert Null abgesenkt und bei einer Ausstattung mit geeigneten Kupplungen auch eine Umkehr der Drehrichtung der Abtriebswelle 18 (bei unveränderter Antriebsrichtung) vorgenommen werden.

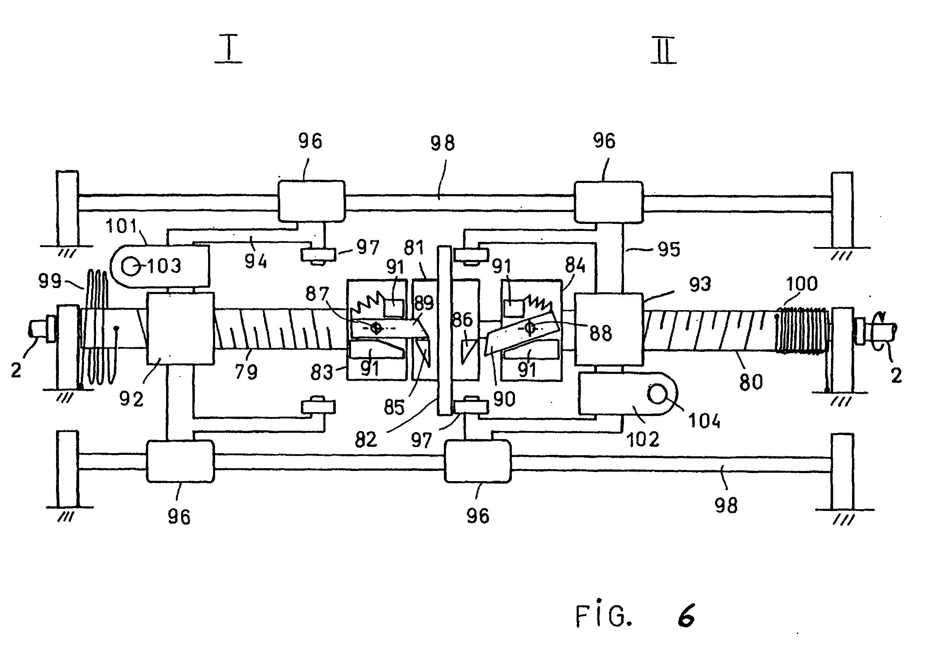

Fig. 6 zeigt in einer Seitenansicht die ersten Kraftübertragungsmittel von zwei Getriebeeinheiten I und II in einer weiteren erfindungsgemäßen Ausführungsform. Als Kraftübertragungsmittel werden hierbei Schraubengetriebe verwendet, die eine Kupplungsvorrichtung zum Verbinden bzw. Trennen der Antriebswelle 2 mit bzw. von den Gewindespindeln 79 und 80 des Schraubengetriebes besitzen.
Die Antriebswelle 2 dreht sich zusammen mit einer auf ihr axial verschiebbaren, aber verdrehfest (z.B. mittels Gleitfeder) angeordneten Kupplungs-Schiebetrommel 81 mit einer Anschlagscheibe 82. Deren Drehbewegung wird wiederum auf wenigstens eine der benachbart zu ihren beiden Seitenflächen befindlichen Kupplungstrommeln 83, 84 übertragen. Zu diesem Zweck sind auf dem Außenmantel der Kupplungs-Schiebetrommel zwei Sperrzähne 85, 86 und auf den Kupplungstrommeln, den Sperrzähnen zugeordnet, je eine um eine Achse 87 bzw. 88 schwenkbare Klinke 89 bzw. 90 angebracht. Bei einer Kupplung mit einer der beiden Kupplungstrommeln befindet sich deren Klinke mit dem benachbarten Sperrzahn der Kupplungs-Schiebetrommel im Eingriff. Die Bewegung der Klinken begrenzen Anschläge 91. Durch Rückstellfedern können die Klinken in einer geneigten Ruhestellung fixiert werden. Die Kupplungstrommeln 83 bzw. 84 sitzen auf den Gewindespindeln 79 bzw. 80 und sind mit ihnen fest verbunden. Beide sind zusammen auf der Antriebswelle 2 drehbar, aber nicht axial verschiebbar gelagert. Die Gewindespindel 79 besitzt ein Rechtsgewinde und befindet sich in Eingriff mit einer Mutter 92. Die Gewindespindel 80 weist dagegen ein Linksgewinde auf und befindet sich in Eingriff mit einer Mutter 93. Die Muttern 93 bzw 94 bilden zusammen mit den mit ihnen fest verbundenen Führungsgestellen 94 bzw. 95, deren beide Enden Linearkugellager 96 sowie Andruckrollen 97 tragen, jeweils ein Schubglied. Bei Drehung der Gewindespindel erfolgt eine Längsbewegung der Mutter und damit des Schubgliedes in Achsrichtung der Antriebswelle 2, wobei dieses durch die Linearkugellager entlang von Führungsschienen 98 geführt wird.
Besteht durch eine Kupplung eine Verbindung zwischen der Kupplungs-Schiebetrommel und einer der beiden Kupplungstrommeln, wird mit dieser Kupplungstrommel zugleich auch die mit ihr verbundene Gewindespindel bewegt und damit deren Schubglied in Achsrichtung auf die Mitte zu (in Richtung der Kupplungs-Schiebetrommel 81) verschoben. Am Ende dieser Hubstrecke berühren dessen Andruckrollen 97 die Anschlagscheibe 82 der Kupplungs-Schiebetrommel und verschieben diese in Richtung der anderen Kupplungstrommel. Infolgedessen kommt es zu einer schlüssigen Verbindung zwischen dieser Kupplungstrommel und der Kupplungs-Schiebetrommel. Die zuvor bestehende Verbindung von Kupplungs-Schiebetrommel und Kupplungstrommel wird danach gelöst. Eine Torsionsfeder 99 bzw. 100 führt anschließend die Gewindespindel, zusammen mit der nunmehr ausgekuppelten Kupplungstrommel, wieder in die Ausgangsstellung zurück, wobei auch deren Schubglied in Richtung seiner äußeren Endstellung zurückbewegt wird. Dieser Vorgang wiederholt sich wechselweise im Zusammenspiel der Kupplungs-Schiebetrommel mit jeweils einer der beiden Kupplungstrommeln, wobei die Torsionsfedern immer abwechselnd ein Zurückdrehen der Gewindespindel 79 bzw. 80 und damit eine Rückholbewegung für das mit ihr im Eingriff befindliche Schubglied bewirken. Die Übertragung der Translationsbewegung des Schubgliedes erfolgt in dieser Ausführungsform - in gleicher Weise wie auch in dem Beispiel der Fig. 1a, b - über Gelenkträger 101, 102 auf drehbare Hebelschienen 103, 104.

## Patentansprüche

1. Getriebe mit stufenlos einstellbarer Übersetzung, bei dem durch wenigstens zwei zeitlich versetzt arbeitende Getriebeeinheiten (I, II) die Drehbewegung einer Antriebswelle (2) absatzweise für jeweils ein Zeitintervall auf eine Abtriebswelle (18) übertragen wird, wobei jede Getriebeeinheit ein erstes Kraftübertragungsmittel (1), eine veränderbare Übersetzungseinrichtung und ein zweites Kraftübertragungsmittel (11) sowie eine selbstschaltende oder schaltbare Kupplung besitzt und wobei - unter der Voraussetzung gerade konstant gehaltener Übersetzungseinstellung - in der Kraftübertragungsphase das erste Kraftübertragungsmittel (1) die gleichförmige Drehbewegung der Antriebswelle (2) in eine gleichförmige Translationsbewegung umwandelt, die Übersetzungseinrichtung diese Bewegung in eine andere, ebenfalls gleichförmige Translationsbewegung mit einer von der Übersetzungseinstellung abhangigen Geschwindigkeit umformt und das zweite Kraftübertragungsmittel (11) diese Translationsbewegung in eine gleichförmige Drehbewegung umwandelt, die wiederum über die Kupplung auf die Abtriebswelle (18) übertragen wird,
**dadurch gekennzeichnet,**
**daß** das zweite Kraftübertragungsmittel (11) ein räumliches Kurvengetriebe oder ein Schraubengetriebe enthält.

2. Getriebe mit stufenlos einstellbarer Übersetzung nach Anspruch 1,
**dadurch gekennzeichnet,**
**daß** das räumliche Kurvengetriebe einen Kurvenzylinder oder Kurvenkegel als räumliches Kurvenglied und einen Schieber als Eingriffsglied aufweist.

3. Getriebe mit stufenlos einstellbarer Übersetzung nach Anspruch 1,
**dadurch gekennzeichnet,**
**daß** das Schraubengetriebe ein relativ zum Gestell verschiebbares Glied und ein drehbar im Gestell gelagertes Glied enthält, die beide durch ein Schraubgelenk miteinander verbunden sind.

4. Getriebe mit stufenlos einstellbarer Übersetzung nach Anspruch 2,
**dadurch gekennzeichnet,**
**daß** der räumliche Kurvenzylinder mit n versetzt und um 360°/n gedreht angeordneten Nutkurven versehen ist und das Eingriffsglied aus einem den Kurvenzylinder umfassenden Bauteil mit n versetzt und um 360°/n gedreht angeordneten Kurvenrollen besteht (n=1, 2, 3...).

5. Getriebe mit stufenlos einstellbarer Übersetzung nach Anspruch 2,
**dadurch gekennzeichnet,**
**daß** das räumliche Kurvenglied wie ein Gewinde ein oder mehrere offene Kurven mit konstanter Steigung besitzt, die vorzugsweise mehrere Umdrehungen beschreiben.

6. Getriebe mit stufenlos einstellbarer Übersetzung nach Anspruch 2,
**dadurch gekennzeichnet,**
**daß** das Eingriffsglied vorzugsweise mehrere Rollen aufweist.

7. Getriebe mit stufenlos einstellbarer Übersetzung nach Anspruch 3,
**dadurch gekennzeichnet,**
**daß** das Schraubgelenk ein Gleitschraubgelenk ist.

8. Getriebe mit stufenlos einstellbarer Übersetzung nach Anspruch 3,
**dadurch gekennzeichnet,**
**daß** das Schraubgelenk ein Wälzschraubgelenk ist.

9. Getriebe mit stufenlos einstellbarer Übersetzung nach Anspruch 1,
**dadurch gekennzeichnet,**
**daß** das erste Kraftübertragungsmittel ein Schraubengetriebe enthalt, dessen beide relativ zum Gestell beweglichen Glieder durch ein Schraubgelenk mit sich einander abwechselnden und sich zu einer geschlossenen Kurve ergänzenden Rechts- und Linksgewindeabschnitten verbunden sind.

10. Getriebe mit stufenlos einstellbarer Übersetzung nach Anspruch 1,
**dadurch gekennzeichnet,**
**daß** das erste Kraftübertragungsmittel ein Schraubengetriebe, eine Kupplung zum Verbinden und Trennen der Antriebswelle mit/von dem drehbar im Gestell gelagerten Glied des Schraubengetriebes sowie Mittel zur Rückwärtsdrehung des drehbar im Gestell gelagerten Gliedes nach dem Trennen der Kupplung enthält.

## Claims

1. A transmission gear with a steplessly adjustable translation ratio, wherein the rotary motion of a drive shaft (2) is transferred to a driven shaft (18) by at least two time staggered operating gear transmission units (I, II) sequentially for in each case a time interval, wherein each gear transmission unit comprises a first force transmission means (1), a changeable translation device and a second force transmission means (11) as well as an automatic switching or switchable coupling and wherein - under the precondition of a just constant maintained translation setting - the first force transmission means (1) transforms the uniform rotary motion of the drive shaft (2) into a uniform rectilinear motion during the force transmission phase, wherein the translation device translates this motion into another, also uniform rectilinear motion with a speed depending on the translation setting and wherein the second force transmission means (11) transforms this rectilinear motion into a uniform rotary motion, wherein the uniform rotary motion is transferred to the driven shaft (18) through the coupling,
**characterized in that** the second force transmission means (11), includes a spatial cam gear transmission or a helical gear transmission.

2. A transmission gear with a steplessly adjustable translation ratio according to claim 1, wherein the spatial cam gear transmission exhibits a cam cylinder or came cone as a spatial cam member and a slider as an engagement member.

3. A transmission gear with a steplessly adjustable translation ratio according to claim 1,
wherein the helical gear transmission includes a first member and a second member, wherein the first member is shiftable relative to the frame and wherein the second member is rotatably supported within the frame, and wherein both the members are connected by a helical link.

4. A transmission gear with a steplessly adjustable translation ratio according to claim 2,
wherein the spatial cam cylinder is furnished like a threading with n groove curves, wherein the displaced groove curves are distorted to each other by 360°/n, wherein the engagement member with its n cam rollers is concentrically surrounding the cam cylinder, and wherein the displaced cam rollers are distorted to each other by 360°/n (n= 1,2,3...).

5. A transmission gear with a steplessly adjustable translation ratio according to claim 2,
wherein the spatial cam member is furnished like a threading with one or several opened curves with a constant slope and wherein the opened curves describe several rotations.

6. A transmission gear with a steplessly adjustable translation ratio according to claim 2,
wherein the engagement member exhibits several cam rollers.

7. A transmission gear with a steplessly adjustable translation ratio according to claim 3,
wherein the helical link is a sliding helical link.

8. A transmission gear with a steplessly adjustable translation ratio according to claim 3,
wherein the helical link is a rolling helical link.

9. A transmission gear with a steplessly adjustable translation ratio according to claim 1,
wherein the first force transmission means includes a worm-gear transmission, wherein the helical gear transmission includes two members being moveable relative to the frame, wherein both members are connected by a helical link, which is formed by alternating right-hand sections and left-hand thread sections, and wherein the right-hand and left-hand sections of the thread complement one another to a closed helical curve.

10. A transmission gear with a steplessly adjustable translation ratio according to claim 1,
wherein the first force transmission means includes a helical gear transmission, a coupling for connecting and separating the drive shaft to/from the rotatable member of the worm-gear supported by the frame and a means for the reverse rotation of the rotatable member, which is supported by the frame.

## Revendications

1. Engrenage avec une transmission réglable de façon continue, dans lequel le mouvement de rotation d'un arbre menant (2) est transmis par reprises pour respectivement un intervalle de temps à un arbre de sortie (18) par au moins deux unités d'engrenage (I, II) travaillant en temps différé, chaque unité d'engrenage présentant un premier moyen de transmission de force (1), un dispositif changeable de transmission et un deuxième moyen de transmission de force (11) ainsi qu'un embrayage embrayant automatiquement ou embrayable, et - à condition d'un réglage de transmission maintenu justement constant - le premier moyen de transmission de force (1) transformant le mouvement uniforme de rotation de l'arbre menant (2) en un mouvement uniforme de translation lors de la phase de transmission de force, le dispositif de transmission transformant ce mouvement en un autre mouvement de translation lui aussi uniforme avec une vitesse dépendant du réglage de transmission, et le deuxième moyen de transmission de force (11) transformant ce mouvement de translation en un mouvement uniforme de rotation qui, de son côté, est transmis par l'embrayage à l'arbre de sortie (18), **caractérisé par le fait que** le deuxième moyen de transmission de force (11) comprend une commande spatiale à came ou un engrenage hélicoïdal.

2. Engrenage avec une transmission réglable de façon continue selon la revendication 1, **caractérisé par le fait que** ladite commande spatiale à came présente un cylindre de came ou un cône de came comme membre spatial de came et un coulisseau comme membre d'engrènement.

3. Engrenage avec une transmission réglable de façon continue selon la revendication 1, **caractérisé par le fait que** l'engrenage hélicoïdal comprend un membre qui peut être déplacé relativement au bâti et un membre qui est logé à rotation dans le bâti, les deux membres étant reliés entre eux par un joint hélicoïdal.

4. Engrenage avec une transmission réglable de façon continue selon la revendication 2, **caractérisé par le fait que** le cylindre spatial de came est pourvu de n courbes en rainure décalées et tournées de 360°/n, et que le membre d'engrènement se compose d'un composant entourant le cylindre de came et ayant n galets de came décalés et tournés de 360°/n (n = 1, 2, 3 ...).

5. Engrenage avec une transmission réglable de façon continue selon la revendication 2, **caractérisé par le fait que** le membre spatial de came présente, comme un filet, une ou plusieurs courbes ouvertes à pas constant qui, de préférence, décrivent plusieurs rotations.

6. Engrenage avec une transmission réglable de façon continue selon la revendication 2, **caractérisé par le fait que** le membre d'engrènement présente de préférence plusieurs galets.

7. Engrenage avec une transmission réglable de façon continue selon la revendication 3, **caractérisé par le fait que** le joint hélicoïdal est un joint hélicoïdal coulissant.

8. Engrenage avec une transmission réglable de façon continue selon la revendication 3, **caractérisé par le fait que** le joint hélicoïdal est un joint hélicoïdal à roulement.

9. Engrenage avec une transmission réglable de façon continue selon la revendication 1, **caractérisé par le fait que** le premier moyen de transmission de force comprend un engrenage hélicoïdal dont les deux membres qui peuvent être déplacés relativement au bâti sont reliés par un joint hélicoïdal à des sections de filet à droite et à des sections de filet à gauche, ces sections se succédant en alternance et se complétant en une courbe fermée.

10. Engrenage avec une transmission réglable de façon continue selon la revendication 1, **caractérisé par le fait que** le premier moyen de transmission de force comprend un engrenage hélicoïdal, un accouplement destiné à relier et à séparer l'arbre menant au/du membre de l'engrenage hélicoïdal, qui est logé à rotation dans le bâti, ainsi que des moyens pour la rotation de retour du membre logé à rotation dans le bâti, après avoir séparé l'accouplement.
